# EUROPÄISCHE PATENTSCHRIFT

(11) **EP 1 462 727 B1**
(45) Veröffentlichungstag und Bekanntmachung des Hinweises auf die Patenterteilung: **26.08.2009**
(21) Anmeldenummer: 04007054.2
(22) Anmeldetag: 24.03.2004
(51) Int. Cl.: F24D 3/14

(54) **Verlegevorrichtung für Kühl- oder Heizmedien führende Rohre einer Flächentemperiervorrichtung**
Device for laying cooling- or heating medium carrying pipes of a thermal surface system
Dispositif pour la pose de tubes traversés par des fluides réfrigérants ou chauffants d'un système de conditionnement thermique à grande surface

(30) Priorität: 24.03.2003 DE 10313076
(43) Veröffentlichungstag der Anmeldung: 29.09.2004
(73) Patentinhaber: Uponor Innovation AB, 513 81 Fristad (SE)
(72) Erfinder: Wenting, Manfred, 22415 Norderstedt (DE); Dellwig, Stefan, 22415 Hamburg (DE); Claussen, Jörg, 48329 Havixbeck (DE); Dankbar, Bernhard, 48607 Ochtrup (DE)
(74) Vertreter: Epping - Hermann - Fischer

(56) Entgegenhaltungen:
- EP-A- 0 947 779
- DE-A1- 2 742 429
- DE-C1- 10 040 643
- DE-U1- 9 106 703
- DE-U1- 9 114 591

## Beschreibung

Die Erfindung betrifft eine Verlegevorrichtung für die ein Kühl- oder Heizmedium führende Rohre einer Flächentemperiervorrichtung.

Eine Verlegevorrichtung gemäß dem Oberbegriff von Anspruch 1 ist z.B. aus dem Dokument DE-U-91 14 591 bekannt.

Flächentemperiervorrichtungen in Form beispielsweise von Fußboden- oder Wandheizungen sind grundsätzlich bekannt.

Hierbei werden die das Medium führenden Rohre von einer tiefgezogenen Kunststofffolie gehalten, die erhabene Bereiche und zwischen diesen angeordnete vertiefte Bereiche aufweisen. In den vertieften Bereichen werden die Rohre aufgenommen, wobei die Rohre an ihren Oberseiten mit den erhabenen Bereichen im Wesentlichen abschließen bzw. gegenüber diesen geringfügig zurückspringen.

Die Anforderung an derartige Flächentemperiervorrichtungen ist insbesondere im Renovierungsbau dergestalt, dass derartige Heizungssysteme eine relativ geringe Aufbauhöhe aufweisen sollen.

Der Erfindung liegt die Aufgabe zugrunde, eine Verlegevorrichtung für Kühl- oder Heizmedien führende Rohre einer Flächentemperiervorrichtung zu schaffen, die eine möglichst geringe Aufbauhöhe aufweist.

Zur Lösung dieser Aufgabe wird mit der Erfindung eine Verlegevorrichtung für Kühl- oder Medien führende Rohre einer Flächentemperiervorrichtung vorgeschlagen, wobei die Verlegevorrichtung versehen ist mit
- einer Kunststofffolie, die erhabene Bereiche und vertiefte Bereiche aufweist,
- wobei Rohre von den vertieften Bereichen aufnehmbar und zwischen den erhabenen Bereichen klemmend fixierbar sind und
- wobei Löcher in zumindest einigen der erhabenen Bereich und Löcher in zumindest einigen der vertieften Bereiche ausgebildet sind.

Die Neuerung der erfindungsgemäßen Verlegevorrichtung besteht darin, dass die z.B. tiefgezogene Kunststofffolie mit Löchern versehen ist, die zumindest in einigen der erhabenen Bereiche und zumindest in einigen der vertieften Bereiche angeordnet sind. Diese Durchbrechungen machen es möglich, dass die Kunststofffolie integraler Bestandteil der Mörtel-Estrich- oder dergleichen Ausgleichsschicht unterhalb des Oberbodens oder der aufzubringenden Schichten der Flächentemperiervorrichtung ist. Durch die Löcher gelangt nämlich die auf die verlegten und mit Rohren versehenen Kunststofffolien aufgebrachte Estrichschicht durch die Löcher hindurch Kontakt mit dem Unterboden bekommt.

Damit findet sich diese Estrichschicht nicht mehr ausschließlich bzw. gar nicht mehr oberhalb der Kunststofffolie sondern schließt deren Aufbauhöhe mit ein bzw. ist gleich der Aufbauhöhe der Kunststofffolie.

Verlegevorrichtungen mit Durchbrüchen sind in Form von Metallgittermatten aus DE-100 40 643 C1 bekannt. Die Besonderheit der erfindungsgemäßen Verlegevorrichtung besteht jedoch darin, dass hier erstmals eine Kunststofffolie in perforierter Form bereitgestellt wird. Die Herstellung einer derartigen Verlegevorrichtung ist wesentlich günstiger als eine Metallgittermatte.

Die Anordnung und Ausgestaltung der erhabenen Bereiche, zwischen denen die Rohre vorzugsweise klemmend gehalten sind, ist für die erfindungsgemäße Verlegevorrichtung nicht entscheidend. So ist es beispielsweise möglich, die Ausgestaltung und Anordnung der erhabenen und vertieften Bereiche derart vorzunehmen, dass neben einer Längs- und Querverlegung der Rohre auch eine 45°-Verlegung möglich ist.

Mit Hilfe der erfindungsgemäßen Verlegevorrichtung lässt sich eine Flächentemperiervorrichtung schaffen, die eine extrem geringe Bauhöhe aufweist. Die Verlegevorrichtung wird zunächst auf einem Untergrund (beispielsweise Rohbeton oder jeder andere Boden bzw. Gebäudewand) aufgebracht und verlegt. Hier ist es zweckmäßig, wenn die Verlegevorrichtung an ihrer an dem Untergrund anliegenden Unterseite selbsthaftend ist. Zweckmäßig insofern ist es, wenn der Haftkleber durch eine klebeabweisende Schutzfolie abgedeckt ist, so dass sich während des Transports der Verlegevorrichtungen zum Verlegeort die Verlegevorrichtungen untereinander nicht verkleben können. Nach dem Verlegen werden dann die Rohre zwischen den erhabenen Bereichen angeordnet. Im Anschluss an die Verbindung der verlegten Rohre mit den Vor- und Rücklaufleitungen der Temperiervorrichtung wird eine beispielsweise Nivelliermasse oder dergleichen dünnflüssige Ausgleichsmasse (beispielsweise auch Fließestrich) über die tiefgezogenen Kunststofffolien gegossen. Mit Hilfe einer Abziehvorrichtung (Rakel oder dergleichen) wird die dünnflüssige Masse verteilt, wobei sie in die Löcher der erhabenen Bereiche und in die Löcher der vertieften Bereiche gelangt. Nach der Aushärtung weist die Nivelliermassenschicht eine Höhe auf, die gleich der Höhe der tiefgezogenen Kunststofffolien ist. Auf diese Schicht kann nun der Oberboden (im Falle beispielsweise einer Fußbodenheizung) oder Putz (im Falle einer Wandtemperiervorrichtung) aufgebracht werden.

Für die Begehbarkeit der Verlegevorrichtung ist es von Vorteil, wenn die erhabenen Bereiche eine gewisse Mindeststabilität aufweisen. Um jedoch auch innerhalb größerer erhabener Bereich zu garantieren, dass die Ausgleichsmasse innerhalb sämtlicher Bereiche unterhalb eines erhabenen Bereichs gelangen kann, müssten über einen erhabenen Bereich betrachtet mehrere Löcher vorgesehen sein, was die Tragfähigkeit des erhabenen Bereichs einschränkt.

Vorteilhaft für die Festigkeit großflächigerer erhabener Bereiche ist es, wenn diese eine zentrische Öffnung aufweisen, um die herum Vertiefungen angeordnet sind, welche wiederum jeweils mindestens ein Loch aufweisen. Die vorzugsweise gleichmäßig um die zentrische Öffnung angeordneten Vertiefungen führen zu einer Versteifung des gesamten erhabenen Bereichs. Benachbart zu den zuvor genannten Vertiefungen befinden sich vertiefte Bereiche der Folie, wobei die Vertiefungen der erhabenen Bereiche und die vertieften Bereiche der Folie wiederum durch erhabene Strukturen voneinander getrennt sind. Hier ist es zweckmäßig, wenn im Bereich dieser Trennungen Aussparungen vorgesehen sind, die es ermöglichen, dass sich eine Vertiefung mit Nivelliermasse dadurch füllt, dass diese seitlich in die Vertiefungen eindringen kann und nicht notwendigerweise von oben in die Vertiefungen eingebracht werden muss. Dies erleichtert das "Befüllen" der Vertiefungen mit Ausgleichs- bzw. Nivelliermasse.

Die Erfindung wurde vorstehend anhand des Beispiels einer tiefgezogenen Kunststofffolie erläutert. Die erfindungsgemäße Verlegevorrichtung ist jedoch auf derartig hergestellte strukturierte Kunststofffolien nicht beschränkt. Als Alternative zu einem Tiefziehprozess kann die Folie auch in Spritzgusstechnik hergestellt sein. Wie bereits oben dargelegt, ist es von Vorteil, wenn die Kunststofffolie einen Haft- oder dergleichen Kleber aufweist. Dieser Kleber ist nicht nur bei Verlegung der Kunststofffolien von Vorteil sondern verhindert auch das Aufschwimmen der Kunststofffolien nach dem Auftrag der Vergussmasse. Letzteres kann alternativ zum Verkleben auch dadurch unterbunden werden, dass die Kunststofffolien mit Hilfe von Drahteinlagen oder Metallkaschierungen beschwert werden.

Die erfindungsgemäße Verlegevorrichtung eignet sich insbesondere für Flächenheizungen, Kühlungen und Temperierungen und kann eingesetzt werden:
1. im Renovierungsbau als nachträgliche Aufbringung auf den vorhandenen Estrich (sanfte Renovierung). Dabei erfolgt der Aufbau durch Aufkleben der Folie, Verlegung des Rohres, Vergießen mit Nivelliermasse mit oder ohne Überdeckung und Aufbringen des Bodenbelages. Der Anschluss der Rohrleitungen erfolgt durch geeignete Miniverteiler, die separat oder vorzugsweise unauffällig an vorhandenen Radiatoren angeschlossen werden. Wegen der Sauerstoffdichtheit der Rohrleitungen ist eine Systemtrennung nicht erforderlich;
2. im Wohnungsneubau als geplante oder nachträgliche Aufbringung auf den neuen Estrich. Der Estrich kann hier entsprechend der Norm konventionell niedrig dimensioniert sein. Eine im Bauvorhaben später geplante Fußbodenheizung kann ohne Höhen- und Komfortverlust eingebracht werden;
3. in Trockenbauanwendungen, dort wo Trockenestrichplatten Verwendung finden. Durch die flächige Gestaltung der Rohrträgerfolie sind die zulässigen Verkehrslasten der Trockenbauelemente ohne weiteres aufzunehmen;
4. in der Wandheizung/Temperierung als Element in Rahmenbauweise unter Gipskartonplatten;
5. in der Wandheizung/Temperierung als Element unter Putz;
6. in der Decke als stille Kühlung unter Putz oder in abgehängten Decken.

Als besondere Vorteile der erfindungsgemäßen Verlegevorrichtung lassen sich folgende Dinge anführen:
1. niedriger Aufbau 12 - 15 mm,
2. tolerierbare Druckverluste, dadurch optimaler Rohraufwand,
3. sehr schnelle Temperaturregelung, keine Trägheit,
4. wirtschaftlich durch Warmwassernutzung mit niedrigen Vorlauftemperaturen,
5. besondere Eignung für alternative Energieerzeugung,
6. schnelle Verlegung ohne lange Wartezeiten,
7. nachträglicher Einbau nahezu überall möglich,
8. Eignung für Elementbeheizungen (z.B. Unterbringung in Türen, Wannenträgern, Designelementen,...)
9. platzsparende Verbindungstechnik für Miniverteiler.

Ein Ausführungsbeispiel der Erfindung wird nachfolgend unter Bezugnahme auf die Zeichnung näher erläutert. Im Einzelnen zeigen dabei:
- Fig. 1: eine ausschnittsweise Draufsicht auf einen Teil einer tiefgezogenen Folie der erfindungsgemäßen Verlegevorrichtung,
- Fig. 2: einen Schnitt entlang der Linie II-II der Fig. 1,
- Fig. 3: einen Schnitt entlang der Linie III-III der Fig. 1 und
- Fig. 4: einen Schnitt entsprechend II-II der Fig. 1 im mit Vergussmasse ausgegossenen Zustand der Folie.

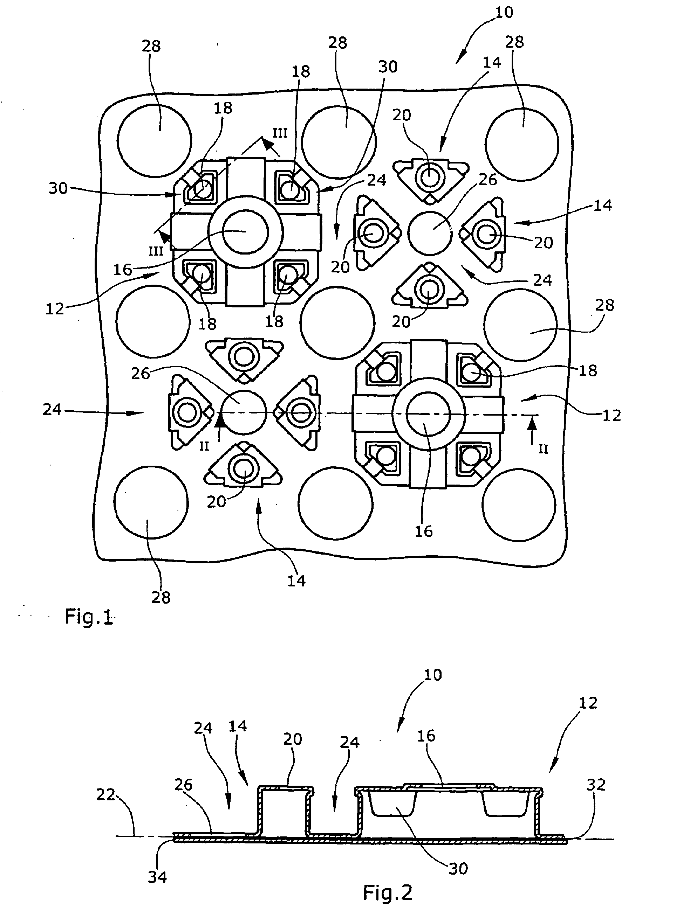

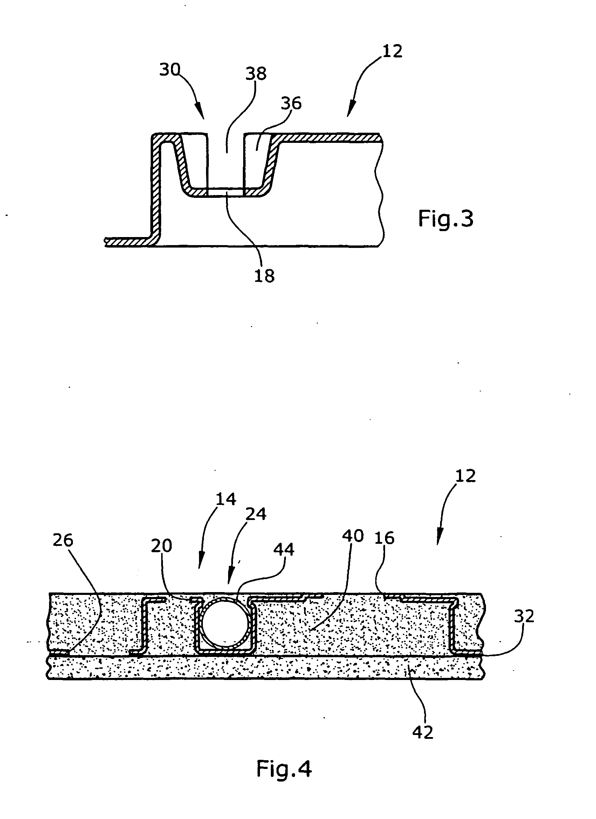

Fig. 1 zeigt in Draufsicht einen Teilbereich einer tiefgezogenen Kunststofffolie 10, die mit einer Vielzahl von im Wesentlichen quadratischen erhabenen Bereichen 12 und einer Vielzahl von in 4er-Gruppen von im Wesentlichen dreieckigen erhabenen Bereichen 14 versehen ist. Diese unterschiedlichen erhabenen Bereiche 12 und 14 sind schachbrettartig relativ zueinander angeordnet. Jeder erhabene Bereich 12, 14 ist mit mindestens einer Öffnung 16,18,20 versehen. Diese Öffnungen sind auch in den Fign. 2 und 3 zu erkennen.

Zwischen den erhabenen Bereichen erstreckt sich die tiefgezogene Folie 10 längs ihrer Auflageebene 22, die den Grund von sich zwischen den erhabenen Bereichen bildenden vertieften Bereichen 24 bilden. Auch in diesen vertieften Bereichen 24 weist die tiefgezogene Folie 10 Öffnungen 26,28 auf.

Wie man insbesondere anhand der Fign. 2 und 3 erkennen kann, befinden sich die Öffnungen 18 der erhabenen Bereiche 12 innerhalb von muldenartigen Vertiefungen 30, die sich von dem obersten Niveau der erhabenen Bereich 12 in Richtung auf die Auflageebene 22 der tiefgezogenen Folie 10 erstrecken und in etwa in diesem Ausführungsbeispiel eine Tiefe aufweisen, die gleich der halben Höhe der erhabenen Bereiche 12 ist.

Zur Befestigung auf einem Untergrund weist die tiefgezogene Folie 10 auf ihrer Unterseite eine Klebeschicht 32 auf, die durch eine Klebekraft abweisende Abdeckschicht 34 abgedeckt ist.

Wie man anhand von Fig. 3 ferner erkennen kann, weist jede muldenartige Vertiefung 30 in der zum benachbarten vertieften Bereich 24 hin angrenzenden Wandung 36 eine Aussparung 38 auf.

Die Besonderheit der tiefgezogenen Folie 10 besteht in der Ausbildung der Öffnungen 16,18,20,26 und 28, die es ermöglichen, dass auf die mit verlegten Rohren versehenen Folien 10 Estrich bzw. Nivelliermasse 40 aufgebracht wird und von oben in die erhabenen Bereiche 12 und 14 hineinläuft und diese ausfüllt (siehe Fig. 4). In die Vertiefungen 30 gelangt die Nivelliermasse 40 unter anderem auch über die Aussparungen 38. Unterhalb der erhabenen Bereiche befindet sich also Nivelliermasse 40, die sowohl innerhalb der vertieften Bereiche 12, 14 als auch in Folge der Öffnungen 26, 28 auch innerhalb der vertieften Bereiche 24 Kontakt mit dem Untergrund 42 hat. Nach Aushärtung der Vergussmasse 40 kann auf die sich so bildende Schicht aus Vergussmasse 40 und tiefgezogener Folie 10 inklusive verlegter Rohre 44 ein Oberboden aufgebracht werden.

## Patentansprüche

1. Verlegevorrichtung für Kühl- oder Heizmedien führende Rohre für eine Flächentemperiervorrichtung, mit
- einer Kunststofffolie (10), die erhabene Bereiche (12,14) und vertiefte Bereiche (24) aufweist,
- wobei Rohre (44) von den vertieften Bereichen (24) aufnehmbar und zwischen den erhabenen Bereichen (12,14) klemmend fixierbar sind und
- wobei Löcher (16,18,20) in zumindest einigen der erhabenen Bereichen (12,14) ausgebildet sind, **dadurch gekennzeicknet, daß** weitere Löcher (26,28) in zumindest einigen der vertieften Bereiche (24) ausgebildet sind.

2. Verlegevorrichtung nach Anspruch 1, **dadurch gekennzeichnet, dass** zumindest einige benachbarte vertiefte Bereiche (24) durch eine Aussparung (38) in einem dazwischen angeordneten erhabenen Bereich (12,14) untereinander verbunden sind.

3. Verlegevorrichtung nach Anspruch 1 oder 2, **dadurch gekennzeichnet, dass** ein erhabener Bereich (12) ein zentrisches Loch (16) aufweist, um das herum innerhalb des erhabenen Bereichs (12) Vertiefungen (18) angeordnet sind.

4. Verlegevorrichtung nach Anspruch 3, **dadurch gekennzeichnet, dass** die Folie (10) innerhalb zumindest einiger ihrer vertieften Bereiche (24) auf ihre Auflageseite ein Klebemittel (32) aufweist und dass die Auflageseite durch eine Klebekraft abweisende Lage (34) abgedeckt ist.

## Claims

1. Mounting unit for pipes containing cooling and heating items for a panel tempering unit, with
- a plastic foil (10) comprising raised areas (12,14) and recessed areas (24),
- wherein pipes (44) can be housed by the recessed areas (24) and be fixed clampably between the raised areas (12,14) and
- wherein holes (16,18,20) are formed in at least some of the raised areas (12,14), **characterized in that** further holes (26,28) are formed in at least some of the recessed areas (24).

2. Mounting unit according to claim 1, **characterized in that** at least some adjacent recessed areas (24) are connected with each other in a raised area (12,14) arranged in between by a cavity (38).

3. Mounting unit according to claim 1 or 2, **characterized in that**
a raised area (12) comprises a centrical hole (16) around which recessions (18) are arranged within the raised area (12) .

4. Mounting unit according to claim 3, **characterized in that** the foil (10) comprises on its bearing side an adhesive (32) within at least some of its recessed areas (24) and **in that** the bearing side is covered by an adhesion-rejecting layer (34) .

## Revendications

1. Dispositif d'installation pour des tuyaux guidant des milieux à réfrigérer ou à chauffer pour un dispositif de chambrer des zones avec
- un film en plastique (10) contenant des étendues élevées (12,14) et des étendues approfondies (24),
- des tuyaux (44) étant absorbables par les étendues approfondies (24) et fixables par serrage entre les étendues élevées (12,14) et
- des trous (16, 18, 20) étant formés dans au moins quelques-unes des étendues élevées, **caractérisés en ce que** d'autres trous (26,28) sont formés dans au moins quelques-unes des étendues approfondies (24).

2. Dispositif d'installation selon la revendication 1, **caractérisé en ce qu'**au moins quelques-unes des étendues approfondies adjacentes (24) sont liées par une niche dans une étendue élevée (12,14) qui est disposée entre eux.

3. Dispositif d'installation selon l'une dés revendications 1 ou 2, **caractérisé en ce qu'**une étendue élevée (12) comporte un trou central, autour duquel des creux (18) sont disposés dans l'étendue élevée (12).

4. Dispositif d'installation selon la revendication 3, **caractérisé en ce que** le film (10) comporte une colle (32) dans au moins quelques-unes de ses étendues approfondies (24) et que le coté du support est couvert d'une couche (34) résistante à la force collante.
